# EUROPEAN PATENT APPLICATION

(11) **EP 3 179 135 A1**
(43) Date of publication of application: **14.06.2017**
(21) Application number: 16197232.8
(22) Date of filing: 04.11.2016
(51) Int. Cl.: F16H 57/04, F04C 15/00

(54) **OIL PUMP DEVICE**

(30) Priority: 09.12.2015 JP 2015239859
(71) Applicant: MAHLE Filter Systems Japan Corporation, Tokyo 170-0004 (JP)
(72) Inventor: HORIMATSU, Toshinobu, Toshima-ku, Tokyo 170-0004 (JP); MASUKURA, Satoshi, Toshima-ku, Tokyo 170-0004 (JP)
(74) Representative: Grünecker Patent- und Rechtsanwälte PartG mbB

(57) **Abstract**

Disclosed is an oil pump device for supplying oil from an oil pan located below a casing of an internal combustion engine or transmission of a vehicle. The oil pump device includes a pump unit placed in the casing and having a pump rotation shaft arranged in parallel to a rotation axis of the internal combustion engine, an electric motor having a motor body mounted to an outer lateral side surface of the casing, a mechanical drive shaft rotatable by an output of the internal combustion engine, a mechanical drive connection mechanism connecting the mechanical drive shaft to one end of the pump rotation shaft, and a reduction gear mechanism placed in the casing and connecting the other end of the pump rotation shaft to a motor rotation shaft of the electric motor.

## Description

### BACKGROUND OF THE INVENTION

The present invention relates to an oil pump device for use in an internal combustion engine or automatic transmission of a vehicle such as hybrid vehicle and, more particularly, to an oil pump device of the type mechanically drivable by an output of an internal combustion engine and electrically drivable by an electric motor.

In a hybrid vehicle, an internal combustion engine is stopped depending on a vehicle traveling condition. For this reason, the hybrid vehicle needs not only an oil pump mechanically driven by an output of the internal combustion engine but also an electric oil pump. The electric oil pump generally has a pump housing formed separately from the internal combustion engine or automatic transmission and connected to a hydraulic system of the internal combustion engine or automatic transmission via a hydraulic line.

There has recently been proposed a mechanically and electrically operable oil pump device such that the oil pump device can be used as a single oil pump in the internal combustion engine or automatic transmission without the need to use an additional electric oil pump.

For example, Japanese Laid-Open Patent Publication No. 2014-231770 discloses an oil pump device with a casing, a trochoid pump unit and an electric motor. The trochoid pump unit is placed in a crankcase of an internal combustion engine and has a pump rotation shaft extending through the pump unit. One end portion of the pump rotation shaft is coupled to the internal combustion engine via a reduction gear mechanism such that the pump unit can be driven and rotated by an output of the internal combustion engine in a mechanical drive mode. The other end of the pump rotation shaft is coupled to a rotor of the electric motor, with a stator disposed around the rotor, such that the pump unit can be directly driven and rotated by the electric motor in an electric drive mode.

Japanese Laid-Open Patent Publication No. 2013-74732 discloses an oil pump device with a gear pump unit. The gear pump unit is placed in a housing of a transmission and has an internal gear and an annular external gear engaged with an outer periphery of the internal gear. The internal gear is coupled to an output shaft of an internal combustion engine such that the pump unit (internal gear) can be driven and rotated by an output of the internal combustion engine in a mechanical drive mode. The external gear is utilized as a rotor of the electric motor, with a permanent magnet (as a part of the motor) disposed on an outer periphery of the external gear and a stator coil disposed around the permanent magnet, such that the pump unit (external gear) can be driven and rotated by the electric motor in an electric drive mode.

### SUMMARY OF THE INVENTION

In the above-disclosed oil pump devices, the electric motor is arranged together with the pump unit within the engine crankcase or transmission housing at a position relatively close to an oil pan and is thereby exposed to an environment where hydraulic oil is scattering. In such an arrangement, there is a difficulty in maintenance of the electric motor even in the event of a failure in the electric motor. Since a terminal portion of the electric motor to which a harness is attached is located inside the engine crankcase or transmission housing and exposed to the oil scattering environment, there is a sealing problem on the terminal portion of the electric motor. There is also a possibility that, due to the existence of the hydraulic oil in the vicinity of the electric motor, malfunction or short-circuit of the electric motor may be caused by attraction and adhesion of magnetic foreign matter (e.g. iron powder) in the hydraulic oil to the electric motor under the action of motor magnetic force.

In view of the foregoing, it is an object of the present invention to provide a mechanically and electrically operable oil pump device free from the problems of maintainability, oil sealing, foreign matter adhesion etc.

According to one aspect of the present invention, there is provided an oil pump device for discharging oil from an oil pan that is attached to a lower side of a casing of an internal combustion engine or transmission in a vehicle, the oil pump device comprising:
a pump unit placed in the casing and having a pump rotation shaft arranged in parallel to an axis of rotation of the internal combustion engine;
an electric motor having a motor body mounted to an outer lateral side surface of the casing;
a mechanical drive shaft rotatable by an output of the internal combustion engine;
a mechanical drive connection mechanism connecting the mechanical drive shaft to one end of the pump rotation shaft such that the output of the internal combustion engine is transmitted from the mechanical drive shaft to the pump rotation shaft through the mechanical drive connection mechanism; and
a reduction gear mechanism placed in the casing and connecting the other end of the pump rotation shaft to a motor rotation shaft of the electric motor such that rotation of the electric motor is reduced by the reduction gear mechanism and transmitted to the pump rotation shaft.

In one preferred embodiment, the motor rotation shaft and the pump rotation shaft are arranged in different directions from each other by 90°; and the reduction gear mechanism includes a pair of bevel gears or hypoid gears.

In another preferred embodiment, the motor rotation shaft and the pump rotation shaft are arranged in parallel to each other; and the reduction gear mechanism includes a pair of spur gears.

With the above configuration, the oil pump device has two drive modes (i.e. a mechanical drive mode and an electric drive mode) for driving rotation of the pump unit. In the mechanical drive mode, the pump unit is driven and rotated by the output of the internal combustion engine. In the electric drive mode during e.g. stop of the internal combustion engine, the pump unit is driven and rotated by the electric motor.

Preferably, the mechanical drive connection mechanism includes a one-way clutch so as not to allow power transmission from the pump unit to the internal combustion engine during the electric drive mode.

Further, the motor body of the electric motor is mounted to the outer lateral side surface of the casing so that a terminal portion of the motor body is not exposed to the inside of the casing where the oil is scattering. There is thus no need to provide an oil seal on the terminal portion of the electric motor. There is also no fear that, even when an iron powder etc. is contained as foreign matter in the oil, such magnetic foreign matter would be attracted and adhered to the motor body.

Since the rotation of the electric motor is transmitted to the pump rotation shaft through the reduction gear mechanism, it is possible to attain a high flexibility in layout of the electric motor by appropriately setting the configuration of the reduction gear mechanism. The motor body of the electric motor can be arranged on the outer lateral side surface of the casing at a position that does not cause interference with the other component parts.

It is preferable that the motor rotation shaft passes through a wall of the casing and extends into the inside of the casing.

As described above, the oil pump device according to the present invention is mechanically drivable by the output of the internal combustion engine and electrically drivable by the electric motor without the problems of maintainability, oil sealing and foreign matter adhesion.

The other objects and features of the present invention will also become understood from the following description.

### BRIEF DESCRIPTION OF THE DRAWINGS

FIG 1 is a schematic top view of a transverse-engine FF vehicle to which an oil pump device according to a first embodiment of the present invention is applied.
FIG 2 is a top view of a part of the vehicle in the vicinity of the oil pump device according to the first embodiment of the present invention.
FIG 3 is a front view of the part of the vehicle in the vicinity of the oil pump device according to the first embodiment of the present invention.
FIG 4 is a plan view of the oil pump device according to the first embodiment of the present invention.
FIG 5 is a top view of a part of a vehicle equipped with an oil pump device according to a second embodiment of the present invention.
FIG 6 is a front view of the part of the vehicle in the vicinity of the oil pump device according to the second embodiment of the present invention.
FIG. 7 is a plan view of the oil pump device according to the second embodiment of the present invention.
FIG. 8 is a schematic view of a longitudinal-engine FR vehicle to which the present invention is applicable.

### DESCRIPTIONS OF THE EMBODIMENTS

The present invention will be described below by way of the following embodiments.

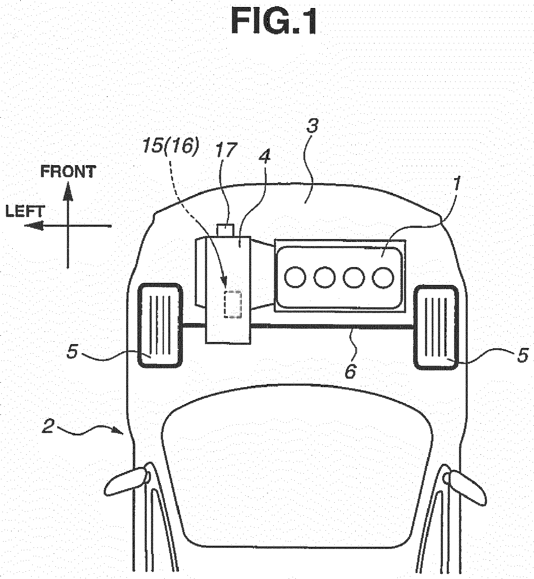

First, the first embodiment of the present invention will be explained below with reference to FIGS. 1 to 4.

FIG 1 is a schematic top view of a vehicle 2 equipped with an oil pump device 15 according to the first embodiment of the present invention.

In the first embodiment, the vehicle 2 is designed as a FF (front-engine, front-wheel-drive layout) vehicle in which an internal combustion engine 1 is placed in a so-called transverse orientation in an engine room 3 as shown in FIG 1. More specifically, the engine room 3 is situated on the front side of a driver's seat in the vehicle 2; and the internal combustion engine 1 is disposed in the engine room 3 with a rotation axis of a crankshaft of the internal combustion engine 1 being arranged in a transverse direction perpendicular to a traveling direction of the vehicle 2. Further, an automatic transmission 4 with a belt-type variable transmission mechanism is connected to one end portion of the internal combustion engine 1. A drive shaft 6 is arranged in the transverse direction through a part of the automatic transmission 4 so that front wheels 5 are driven and rotated by the drive shaft 6.

The oil pump device 15 is utilized as a hydraulic oil pump in the automatic transmission 4 in the first embodiment.

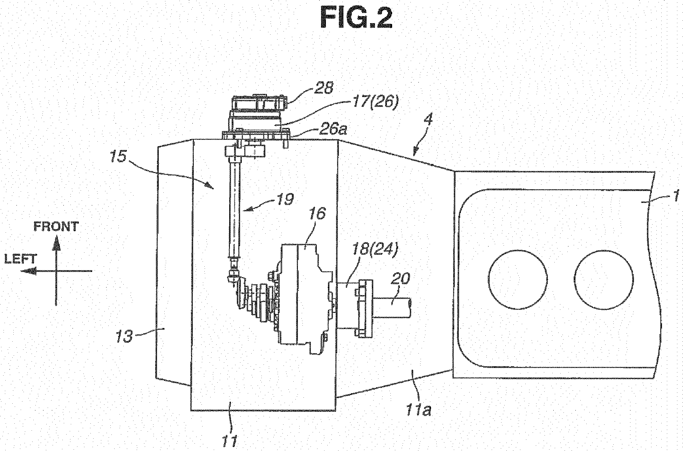

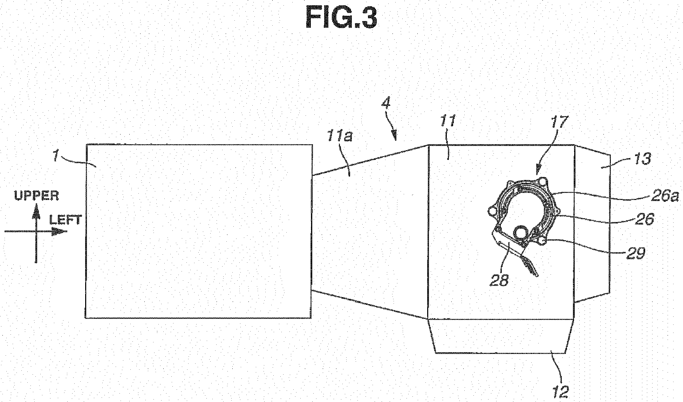

FIG 2 is a top view of the internal combustion engine 1 and the automatic transmission 4. In particular, the oil pump device 15 is shown in perspective view in FIG. 2. FIG 3 is a front view of the internal combustion engine 1 and the automatic transmission 4.

As shown in FIGS. 2 and 3, the automatic transmission 4 has a transmission housing 11 (as a casing) formed of an aluminum die-cast material so as to accommodate therein the variable transmission mechanism. An oil pan 12, which stores therein hydraulic oil, is attached to a bottom (lower) side of the transmission housing 11. A part of the transmission housing 11 is configured as a torque converter housing 11a in which a torque converter (not shown) is accommodated. An end portion of the torque converter housing 11 a is fixed to an end portion of a cylinder block of the internal combustion engine 1. The automatic transmission 4 also has a side cover 13 (as a part of the casing) formed of an aluminum die-cast material and detachably coupled to the transmission housing 11 so as to cover an open lateral end portion of the transmission housing 11 opposite to the torque converter housing 11a.

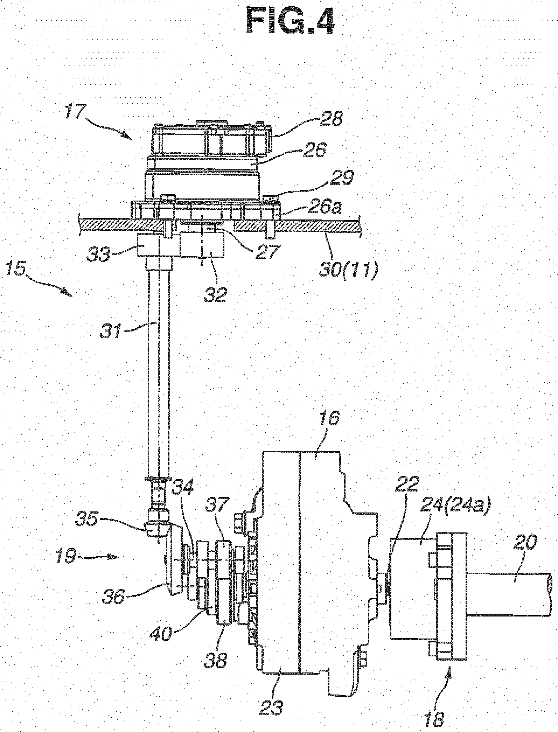

The oil pump device 15 is adapted to suck up and discharge the hydraulic oil from the oil pan 12 to the variable transmission mechanism through a valve unit (not shown). As shown in FIGS. 1 to 3, the oil pump device 15 includes a pump unit 16 placed in the transmission housing 11, an electric motor 17 mounted to a lateral side wall 30 of the transmission housing 11 (also see FIG 4), a mechanical drive shaft 20 rotatably disposed in the transmission housing 11 and connected to the internal combustion engine 1 via a main input shaft of the automatic transmission 4, a mechanical drive connection mechanism 18 connecting the mechanical drive shaft 20 to the pump unit 16 and a reduction gear mechanism 19 connecting the electric motor 17 to the pump unit 16.

FIG 4 is a plan view of the oil pump device 15 itself as viewed from the top side of the vehicle.

The pump unit 16 can be of any type as long as the pump unit 16 performs a pump function by rotation of the pump rotation shaft 22. In the first embodiment, a so-called pendulum-slider pump (as disclosed in Japanese Laid-Open Patent Publication No. 2015-117695) is used as the pump unit 16. Any other ordinary vehicle-use oil pump such as trochoid pump or vane pump may alternatively be used as the pump unit 16. The pump unit 16 has a pump housing 23 and a pump rotation shaft 22 extending through the pump housing 23, with both end portions of the pump rotation shaft 22 protruding from the pump housing 23. The mechanical drive shaft 20 is arranged in parallel to the main input shaft of the automatic transmission 4 so as to receive an output of the internal combustion engine 1 from through the main input shaft of the automatic transmission 4. The position of the pump unit 16 is adjusted in such a manner that the pump rotation shaft 22 and the mechanical drive shaft 20 are aligned in a line with each other. Accordingly, the pump rotation shaft 22 is arranged in parallel to the rotation axis of the main input shaft of the automatic transmission 4, that is, in parallel to the rotation axis of the internal combustion engine 1.

The mechanical drive connection mechanism 18 is configured to connect or disconnect one end of the pump rotation shaft 22 to or from a tip end of the mechanical drive shaft 20. In the first embodiment, the mechanical drive connection mechanism 18 is provided with a one-way clutch 24. The one-way clutch 24 has an outer race 24a (as an input part) coupled and fixed to the tip end of the mechanical drive shaft 20 and an inner race (as an output part; not shown) coupled and fixed to one end portion of the pump rotation shaft 22 so as to allow power transmission in a specific rotation direction from the outer race 24a to the inner race. When the mechanical drive shaft 20 is rotated by the output of the internal combustion engine 1, the one-way clutch 24 comes into engagement to cause driving rotation of the mechanical drive shaft 20 by rotation of the pump rotation shaft 22. When the pump rotation shaft 22 rotates at a higher speed than the rotation speed of the mechanical drive shaft 20, the one-way clutch 24 rotates at idle so as not to cause driving rotation of the mechanical drive shaft 20 by rotation of the pump rotation shaft 22.

Alternatively, the pump rotation shaft 22 and the mechanical drive shaft 20 may be simply directly connected to each other by arranging a similar one-way clutch at an appropriate position on a power transmission path from the main input shaft of the automatic transmission 4 to the mechanical drive shaft 20.

On the other hand, the electric motor 17 is configured to apply torque to the other end portion of the pump rotation shaft 22 through the reduction gear mechanism 19. In the first embodiment, the electric motor 17 is in the form of a permanent-magnet three-phase motor capable of freely changing its rotation speed by means of a drive circuit with an inverter. As shown in FIG 4, the electric motor 17 has a flat cylindrical motor body 26 smaller in axial dimension relative to its diameter and a motor rotation shaft 27 protruding from one end side of the motor body 26. A fixing flange 26a is formed at one end of the motor body 26 so that the motor body 26 is fixed to an outer surface of the lateral side wall 30 of the transmission housing 11 by insertion of a plurality of bolts 29 through the fixing flange 26a. The motor rotation shaft 27 passes through the lateral side wall 30 of the transmission housing 11 and extends into the inside of the transmission housing 11. A connector 28 (as a terminal portion) is formed at the other end of the motor body 26 so that a harness is attached to the connector 28 for electrical connection to the drive circuit.

The reduction gear mechanism 19 is arranged inside the transmission housing 11 and configured to provide connection between the pump rotation shaft 22 and the motor rotation shaft 27, reduce the rotation of the electric motor 17 and transmit the reduced rotation to the pump rotation shaft 22.

As shown in FIGS. 2 and 4, the pump rotation shaft 22 and the motor rotation shaft 22 are arranged in different directions from each other by 90°in the first embodiment. The reduction gear mechanism 19 hence performs the function of changing the power transmission direction by an angle of 90°.

More specifically, the reduction gear mechanism 19 includes first and second intermediate shafts 31 and 34. Since the pump rotation shaft 22 and the motor rotation shaft 27 are located relatively further apart from each other in the transmission housing 11, the first intermediate shaft 31 is made relatively long for power transmission between the pump rotation shaft 22 and the motor rotation shaft 27. By contrast, the second intermediate shaft 34 is made relatively short. The reduction gear mechanism 19 further includes a pair of spur gears 32 and 33 engaged with each other so as to allow power transmission from the motor rotation shaft 27 to one end portion of the first intermediate shaft 31, a pair of bevel gears 35 and 36 engaged with each other so as to allow power transmission from the other end portion of the first intermediate shaft 31 to the second intermediate shaft 34 at an angle of 90° and a pair of spur gears 37 and 38 engaged with each other so as to allow power transmission from the second intermediate shaft 34 to the pump rotation shaft 22.

The first intermediate shaft 31 is rotatably supported on a bearing mechanism (not shown) in the transmission housing 11 in parallel to the motor rotation shaft 27. In the first embodiment, the reduction ratio of the spur gears 32 and 33 between the motor rotation shaft 27 and the first intermediate shaft 31 is set equal or close to 1:1 such that the first intermediate shaft 31 rotates at substantially the same speed as the motor rotation shaft 27.

The second intermediate shaft 34 is rotatably supported on a bearing mechanism (not shown) in the transmission housing 11, at a position close to the pump unit 16, in parallel to the pump rotation shaft 22. The bevel gear 36 on the second intermediate shaft 34 is made larger in diameter than the bevel gear 35 on the first intermediate shaft 31 so as to establish a relatively large reduction ratio. The spur gear 38 on the pump rotation shaft 22 is made larger in diameter than the spur gear 37 on the second intermediate shaft 34 so as to establish a relatively large reduction ratio. In the first embodiment, the reduction ratio of the bevel gears 35 and 36 and the spur gears 37 and 38 in combination is set to about 8:1 to 4:1. Namely, the gear teeth of these respective gears are adjusted in such a manner that, when the electric motor 17 rotates at 8000 rpm, the rotation speed of the pump unit 16 ranges approximately from 1000 to 2000 rpm.

In the first embodiment, the oil pump device 15 further includes a one-way clutch 40 between the pump rotation shaft 22 and the spur gear 38 as in the case of the one-way clutch 24 between the mechanical drive shaft 20 and the pump rotation shaft 22. The one-way clutch 40 has an outer race (as an input part) onto which the spur gear 38 is coupled and fixed and an inner race (as an output part) coupled and fixed to the pump rotation shaft 22 so as to allow power transmission in a specific rotation direction from the outer race to the inner race. When the electric motor 17 is driven, the one-way clutch 40 comes into engagement to cause driving rotation of the pump rotation shaft 22 by rotation of the electric motor 17 via the gears 37 and 38. When the pump rotation shaft 22 rotates at a higher speed than the rotation speed of the outer racer of the one-way clutch 40, i.e., the rotation speed of the gear 38, the one-way clutch 40 rotates at idle so as not to cause driving rotation of the electric motor 17 by rotation of the pump rotation shaft 22. The one-way clutch 40 may be omitted in the case where the electric motor 17 is made rotatable by the output of the internal combustion engine 1.

In the above-configured oil pump device 15, the mechanical drive shaft 20 is rotated in synchronism with the rotation of the engine crankshaft during operation of the internal combustion engine 1. The output power of the internal combustion engine 1 is transmitted from the mechanical drive shaft 20 to the pump rotation shaft 22 via the one-way clutch 24. Thus, the pump unit 16 is mechanically driven by the output power of the internal combustion engine 1. In this mechanical drive mode, the electric motor 17 is stopped; and the one-way clutch 40 is in idle rotation.

During temporary stop such as idle stop of the internal combustion engine 1 at an intersection etc., the electric motor 17 is actuated. The pump unit 16 is thus electrically driven by the electric motor 17 via the reduction gear 17. In this electrical drive mode, the one-way clutch 24 is in idle rotation so as not to allow power transmission from the electric motor 17 to the internal combustion engine 1.

It should be noted that the rotation direction of the pump unit 16 is the same in both of the mechanical drive mode and the electrical drive mode.

As described above, the oil pump device 15 of the first embodiment is mechanically and electrically operable. The pump unit 16 is placed inside the transmission housing 11 in which the hydraulic oil is scattering, whereas the motor body 26 of the electric motor 17 is mounted to the outer surface of the lateral side wall 30 of the transmission housing 11. It is therefore possible to facilitate maintenance of the electric motor 17 in the event of a failure in the electric motor 17 so that the oil pump device 15 attains good maintainability. Further, the connector 28 of the electric motor 17 to which the harness is attached is located outside the transmission housing 11 and thus does not require a special seal against the hydraulic oil. Since the hydraulic oil is not brought into contact with the vicinity of the motor body 26 of the electric motor 17, there is no risk that magnetic foreign matter such as iron powder contained in the oil will be attracted and adhered to the electric motor 17 under the action of magnetic force from the electric motor 17.

Furthermore, the reduction gear mechanism 19 is provided with the intermediate shaft 31 etc. so that the electric motor 17 and the pump unit 16 are connected to each other by the reduction gear mechanism 19. By the use of such a reduction gear mechanism 19, it is possible to attain a high flexibility in layout of the electric motor 17 relative to the pump unit 16. In the first embodiment, the bevel gears 35 and 36 are used in the reduction gear mechanism 19 so as to change the power transmission direction by an angle of 90°. The electric motor 17 can be thus mounted to the lateral side wall 30 of the transmission housing 11 on the front side of the vehicle 2 where there is unlikely to occur interference of the electric motor 17 with the front wheels 5. In particular, the electric motor 17 can be arranged at a relatively high position less susceptible with dirt splashes (see FIG. 3) in the first embodiment. In addition, the electric motor 17 can be arranged so as not to cause interference with the other component parts such as oil strainer as the spur gears 37 and 38 are used in the reduction gear mechanism 19. Consequently, the oil pump device 15 combines mechanical and electrical drive means in spite of the limited space of the transmission housing 11.

As the rotation of the electric motor 17 is reduced to about one-eighth to one-fourth by the reduction gear mechanism 19 in the first embodiment, the motor torque is increased to about four times to eight times and transmitted to the pump unit 16. It is thus possible to use a compact pump as the electric motor 17.

In the first embodiment, hypoid gears may be used in place of the bevel gears 35 and 36; and helical gears may be used in place of the spur gears 32, 33, 37 and 38.

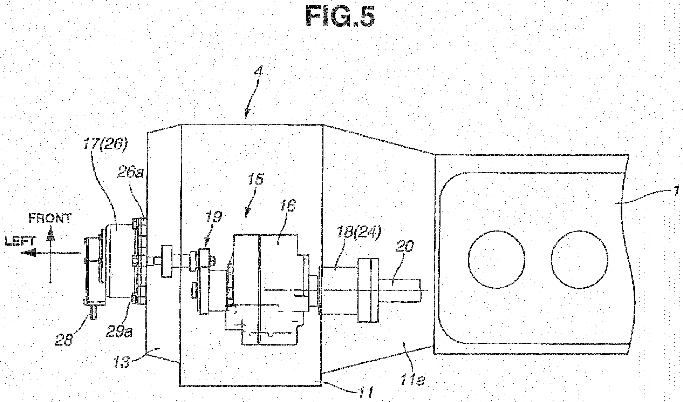

Next, the second embodiment of the present invention will be explained below with reference to FIGS. 5 to 7.

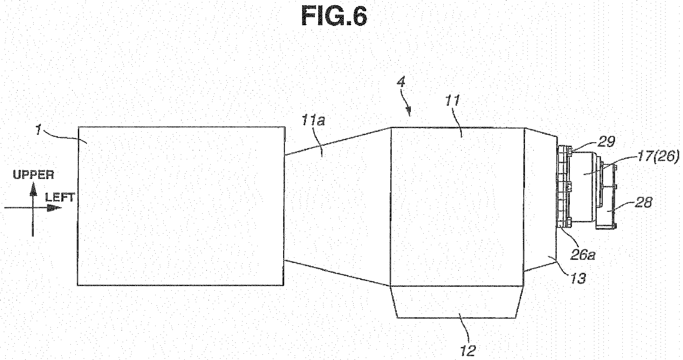

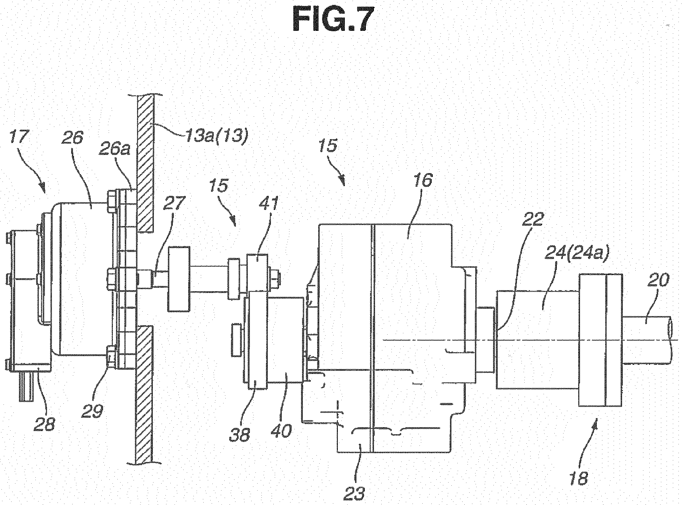

FIGS. 5 and 6 are a top view and front view of a front part of a vehicle equipped with an oil pump device 15 according to the second embodiment of the present invention. As in the case of FIG. 2, the oil pump device 15 is shown in perspective view in FIG. 5. FIG. 7 is a plan view of the oil pump device 15 according to the second embodiment of the present invention.

The oil pump device 15 of the second embodiment is structurally similar to that of the first embodiment, except for the position of arrangement of the electric motor 17 and the configuration of the reduction gear mechanism 19. The following explanation will be focused on the differences between the first and second embodiments; and repetitive explanation of the same or similar configurations of the second embodiment to the first embodiment will be avoided as necessary.

In the second embodiment, the pump unit 16 is placed in the transmission housing 11, with the pump rotation shaft 22 of the pump unit 11 being arranged in parallel to the rotation axis of the internal combustion engine 1 and connected to the mechanical drive shaft 20 via the mechanical drive connection mechanism 19, as shown in FIG 5 as in the case of the first embodiment. Further, the mechanical drive connection mechanism 19 is also provided with the one-way clutch 24 in the second embodiment.

On the other hand, the electric motor 17 is mounted to an outer surface of the side cover 13, which is coupled to cover the open lateral end portion of the transmission housing 11, with the motor rotation shaft 27 of the electric motor 17 being arranged in parallel to the pump rotation shaft 22 and passing through a wall 13a of the side cover 13 as shown in FIGS. 5 to 7. The motor rotation shaft 22 is made longer in the second embodiment than in the first embodiment.

As shown in FIG. 7, the reduction gear mechanism 19 includes a spur gear 41 disposed on the pump-side end portion of the motor rotation shaft 27 and engaged with the spur gear 38 on the pump rotation shaft 22. As in the case of the first embodiment, the spur gear 38 is coupled and fixed to the outer periphery of the outer race (as input part) of the one-way clutch 40. The spur gear 41 on the motor rotation shaft 27 is made smaller in diameter than the spur gear 38 on the pump rotation shaft 22 so as to establish a reduction ratio of about 8:1 to 4:1. Namely, the gear teeth of these respective gears are adjusted in such a manner that, when the electric motor 17 rotates at 8000 rpm, the rotation speed of the pump unit 16 ranges approximately from 1000 to 2000 rpm.

It is therefore possible in the second embodiment to obtain the same effects as in the first embodiment. As shown in FIG. 6, the electric motor 17 can also be arranged at a relatively high position less susceptible with dirt splashes in the second embodiment.

Furthermore, it is possible to attain a high flexibility in layout of the electric motor 17 by appropriately setting the configuration of the reduction gear mechanism 19. The electric motor 17 can be arranged at the optimum position depending on the kind of the vehicle. For example, the electric motor 17 is arranged at the position shown in FIGS. 1 to 4 is adopted in the case where there is a small clearance left between the side cover 13 of the transmission housing 11 and the front wheels 5. In the case where there is a sufficient clearance between the side cover 13 of the transmission housing 11 and the front wheels 5, by contrast, the electric motor 17 is arranged at the position shown in FIGS. 5 to 7.

The present invention is based on Japanese Patent Application No. 2015-239859 (filed on December 9,2015) of which the entire contents are herein incorporated by reference.

Although the present invention has been described with reference to the above exemplary embodiments, it should be understood that the present invention is not limited to these exemplary embodiments. Various changes and modifications of the embodiments described above will occur to those skilled in the art in light of the above teachings.

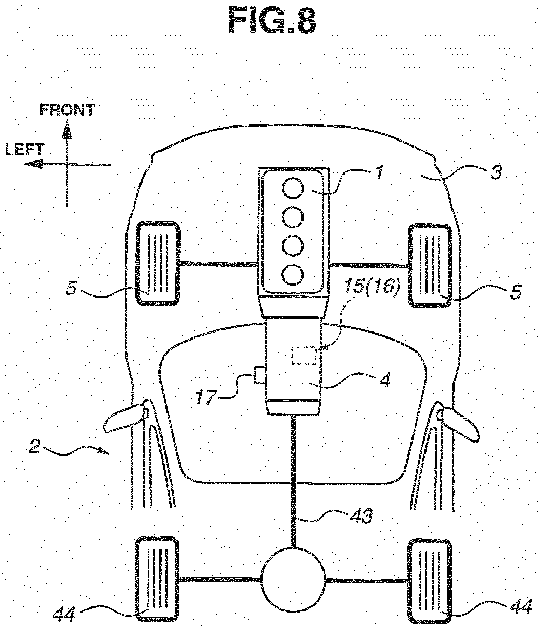

In the above embodiments, the present invention is embodied as the oil pump device of the transmission in the transverse-engine FF vehicle. The present invention is however not limited to such an application. As shown in FIG. 8, the present invention can be applied to a longitudinal-engine FR vehicle as the oil pump device 15 of the internal combustion engine 1 or the automatic transmission 4. In the longitudinal-engine FR vehicle, the internal combustion engine 1 and the automatic transmission 4 (e.g. stepwise transmission mechanism) are arranged in series so as to drive rear wheels 44 via a propeller shaft 43. In the application example of FIG. 8, the oil pump device 15 is utilized as a hydraulic oil pump in the automatic transmission 4. Even in this case, the electric motor 17 of the oil pump device 15 is mounted to the outer lateral side surface of the transmission housing 11. As the pump rotation shaft 22 of the pump unit 16 is arranged in parallel to the axis of rotation of the internal combustion engine 1, the reduction gear mechanism 19 is provided with bevel gears or hypoid gears as in the case of FIG. 4.

The scope of the present invention is defined with reference to the following claims.

## Claims

1. An oil pump device (15) for discharging oil from an oil pan (12) that is attached to a lower side of a casing (11) of an internal combustion engine (1) or transmission (4) in a vehicle (2), the oil pump device (15) comprising:
a pump unit (16) placed in the casing (11) and having a pump rotation shaft (22) arranged in parallel to an axis of rotation of the internal combustion engine (2);
an electric motor (17) having a motor body (26) mounted to an outer lateral side surface of the casing (11);
a mechanical drive shaft (20) rotatable by an output of the internal combustion engine (2);
a mechanical drive connection mechanism (18) connecting the mechanical drive shaft (20) to one end of the pump rotation shaft (22) such that the output of the internal combustion engine (2) is transmitted from the mechanical drive shaft (20) to the pump rotation shaft (22) through the mechanical drive connection mechanism (18); and
a reduction gear mechanism (19) placed in the casing (11) and connecting the other end of the pump rotation shaft (22) to a motor rotation shaft (27) of the electric motor (17) such that rotation of the electric motor (17) is reduced by the reduction gear mechanism (19) and transmitted to the pump rotation shaft (22).

2. The oil pump device (15) according to claim 1,
wherein the motor rotation shaft (27) and the pump rotation shaft (22) are arranged in different directions from each other by 90°; and
wherein the reduction gear mechanism (19) includes a pair of bevel gears (35, 26) or hypoid gears.

3. The oil pump device (15) according to claim 1,
wherein the motor rotation shaft (27) and the pump rotation shaft (22) are arranged in parallel to each other; and
wherein the reduction gear mechanism (19) includes a pair of spur gears (38,41).

4. The oil pump device (15) according to any one of claims 1 to 3,
wherein the motor rotation shaft (27) passes through a wall (30, 13) of the casing (11) and extends into the inside of the casing (11).

5. The oil pump device (15) according to any one of claims 1 to 4,
wherein the mechanical drive connection mechanism (18) includes a one-way clutch (24).
